# EUROPÄISCHE PATENTSCHRIFT

(11) **EP 2 350 538 B1**
(45) Veröffentlichungstag und Bekanntmachung des Hinweises auf die Patenterteilung: **08.05.2013**
(21) Anmeldenummer: 09778531.5
(22) Anmeldetag: 15.09.2009
(51) Int. Cl.: F24J 2/52, H01L 31/042

(54) **PHOTOVOLTAIKANLAGE**
PHOTOVOLTAIC INSTALLATION
INSTALLATION PHOTOVOLTAÏQUE

(30) Priorität: 28.04.2009 DE 102009014666; 28.04.2009 DE 102009011886; 27.05.2009 DE 202009007556 U
(43) Veröffentlichungstag der Anmeldung: 03.08.2011
(73) Patentinhaber: Eulektra GmbH, 46485 Wesel (DE)
(72) Erfinder: Hain, Siegfried, 46499 Hamminkeln (DE)
(74) Vertreter: Nunnenkamp, Jörg
(86) Internationale Anmeldenummer: PCT/EP2009/006667
(87) Internationale Veröffentlichungsnummer: WO 2010/124710

(56) Entgegenhaltungen:
- EP-A1- 1 568 950
- EP-A1- 2 080 964
- EP-A2- 1 619 727
- WO-A2-2005/011000
- DE-A1- 19 601 069
- DE-A1-102006 050 456
- DE-A1-102007 050 977
- JP-A- 3 199 565
- JP-A- 9 032 224
- JP-A- 10 002 622
- JP-A- 11 177 114
- JP-A- 60 030 955
- JP-A- 63 148 052
- US-A1- 2003 070 705
- US-A1- 2005 050 811

## Beschreibung

Die Erfindung betrifft eine Photovoltaikanlage, mit wenigstens einer Solarzelle, und mit einer Aufständereinrichtung zur Anbringung der wenigstens eine Solarzelle oberhalb einer Unterstützungsfläche, beispielsweise eines Daches oder Hausdaches, einer Stellfläche etc., wobei die Aufständereinrichtung schwimmend auf der Unterstützungsfläche gelagert ist.

Eine Photovoltaikanlage des eingangs beschriebenen Aufbaus wird beispielsweise in der DE 196 01 069 A1 beschrieben. Hier geht es um eine Vorrichtung zur Befestigung von flächigen Komponenten einer Solarenergieanlage auf oder an ebenen Flächen und insbesondere auf Dächern. Zu diesem Zweck sind im Vergleich zu der betreffenden Ebene etwa parallele Drähte gespannt, welche in entsprechende Ausnehmungen von Montageelementen eingelegt sind. Die Drähte lassen sich im Bereich einer Dachtraufe am Dachstuhl verankern. Auf diese Weise sollen einerseits Verletzungen der Dachhaut verhindert werden und andererseits keine hohen Anpresskräfte auf die Dachhaut einwirken.

DE 196 01 069 A1 beschreibt den Oberbegriff des Anspruchs 1.

Darüber hinaus werden ähnliche Photovoltaikanlagen beispielhaft und nicht einschränkend in der DE 203 11 967 U1 vorgestellt. Hier geht es um eine Tragkonstruktion zur Aufständerung von Solaranlagen auf zu begrünenden Flachdächern. Diese besteht aus einer Grundplatte aus Kunststoff, die mit einer Auflast aus Schüttgut versehen wird. Außerdem ist ein Tragrahmen aus korrosionsbeständigem Metall vorgesehen, auf welchem Querschienen befestigt werden können. Die Querschienen sind ihrerseits zur Aufnahme von Solarmodulen geeignet. Die Grundplatte weist unterseitig längs- und querlaufende Drainagekanäle auf.

Im Rahmen der bekannten Lehre wird also Schüttgut eingesetzt, welches als Auflast für die Grundplatte fungiert. Dadurch ist die Montage aufwendig und es werden letztlich Dachlasten erzeugt, die kaum von Hallendächern aufgenommen werden können.

Daneben kennt man herkömmliche Photovoltaikanlagen, die beispielsweise in ein Schrägdach integriert sind. In diesem Zusammenhang schlägt die DE 10 2007 020 151 A1 mehrere Rahmenelemente vor. Dabei ist ein oberes Rahmenelement mit einem derart nach unten vorstehenden Abschnitt ausgerüstet, welcher einen Halt des solchermaßen realisierten Solarmoduls an einer Dachlatte ermöglicht. Die Befestigung an der Dachlatte erfordert also einen tiefgreifenden Eingriff in die Dachhaut. Dadurch eignen sich die bekannten Solarmodule für etwaige Nachrüstungen kaum. Außerdem besteht bei einer solchen Befestigung die ständige Gefahr, dass Undichtigkeiten der Dachhaut beobachtet werden, die schwere Gebäudeschäden nach sich ziehen können.

Von besonderer Bedeutung ist schließlich noch die Lehre nach der JP 10002622 A, welche sich mit einer Photovoltaikanlage beschäftigt, die als Sonnenkollektor zur Erhitzung von Wasser ausgelegt ist. Auch in diesem Fall ist eine Aufständereinrichtung realisiert, die unter Zwischenschaltung eines Vibrationsschutzgummis auf einem Dach ruht und etwaige Erdbebenschäden vermeiden soll. Tatsächlich stellt das fragliche Vibrationsschutzgummi eine Gleitschutzwirkung zur Verfügung und dient zur Schwingungsabsorption. Dadurch soll ein Verschieben und Abfallen von Ziegeln oder eine Beschädigung der Ziegel des Daches stark verringert werden.

Der Erfindung liegt das technische Problem zugrunde, eine derartige Photovoltaikanlage so weiter zu entwickeln, dass die hiermit verbundene Dachlast gering ist und Gebäudeschäden möglichst vermieden werden. Außerdem soll eine schnell zu montierende Lösung mit der Möglichkeit zur Nachrüstung geschaffen werden.

Zur Lösung dieser technischen Problemstellung schlägt die Erfindung bei einer gattungsgemäßen Photovoltaikanlage vor, dass die Aufständereinrichtung unter Zwischenschaltung wenigstens einer Matte aus einem flexiblen Kunststoffmaterial auf der Unterstützungsfläche schwimmend gelagert ist, wobei die wenigstens eine Matte einen Spielausgleich zwischen einerseits der Aufständereinrichtung und andererseits der Unterstützungsfläche in Längs- und Querrichtung, das heißt entlang der Fläche, ermöglicht, und wobei zwischen der wenigstens eine Matte und der Aufständereinrichtung sowie zwischen der wenigstens eine Matte und der Unterstützungsfläche jeweils geringe Reibzahlen von allgemein unterhalt von 0,5 vorliegen und auf diese Weise die schwimmende Lagerung unterstützen.

Mit Hilfe der schwimmenden Lagerung der Aufständereinrichtung auf der Unterstützungsfläche wird ausdrücklich ein Spiel der Aufständereinrichtung gegenüber der Unterstützungsfläche zugelassen, und zwar sowohl in Längs- als auch in Querrichtung. Das heißt, die Aufständereinrichtung ist weder in Längs- noch in Querrichtung fest mit der Unterstützungsfläche verbunden, sondern kann in beiden Richtungen mehr oder minder ausgeprägte Bewegungen vollführen. Durch die realisierte schwimmende Stützlagerung wird eine kostengünstige Verbindung zwischen der Aufständereinrichtung und der Unterstützungsfläche zur Verfügung gestellt. Außerdem ist der Konstruktionsaufwand gering. Dabei stellt die schwimmende Lagerung insgesamt sicher, dass beispielsweise temperaturbedingte (unterschiedliche) Ausdehnungen von einerseits der Unterstützungsfläche und andererseits der Aufständereinrichtung problemlos aufgenommen werden können.

In diesem Zusammenhang wird vorteilhaft so vorgegangen, dass die Aufständereinrichtung lediglich randseitig mit der Unterstützungsfläche verbunden ist. Dahingegen ist die Oberfläche der Unterstützungsfläche befestigungsfrei gestaltet. Auf diese Weise werden Beschädigungen einer Dachhaut als Unterstützungsfläche zuverlässig ausgeschlossen, weil die Dachhaut nicht für die Befestigung der erfindungsgemäßen Aufständereinrichtung durchdrungen wird und auch nicht durchdrungen werden muss. Das heißt, Befestigungsbohrungen können entfallen. Vielmehr wird die Aufständereinrichtung in der Regel mittels einem oder mehreren Abspannmitteln mit der Unterstützungsfläche randseitig verbunden. Dazu ist das jeweilige Abspannmittel einerseits an die Seitenkante der Unterstützungsfläche und andererseits an die Aufständereinrichtung angeschlossen. Das mag an oder in der Nähe des Höchsten der Aufständereinrichtung erfolgen.

In diesem Fall wird man die Auslegung meistens so treffen, dass das jeweilige Abspannmittel die Aufständereinrichtung mit einer Kraft beaufschlagt, die im Wesentlichen senkrecht oder nahezu senkrecht zur Unterstützungsfläche ausgerichtet ist. Folgerichtig wird die Aufständereinrichtung gegen die Unterstützungsfläche mit Hilfe des einen oder der mehreren Abspannmittel ziehend gedrückt, wobei allerdings unverändert die Aufständereinrichtung schwimmend gegenüber der Unterstützungsfläche gelagert ist.

Um diese schwimmende Lagerung zu unterstützen, ist die Aufständereinrichtung unter Zwischenschaltung der wenigstens einen Matte auf der Unterstützungsfläche aufgelagert. Bei dieser Matte handelt es sich um eine solche aus dem flexiblen Kunststoffmaterial, welche den Spielausgleich zwischen einerseits der Aufständereinrichtung und andererseits der Unterstützungsfläche in Längs- und Querrichtung, das heißt entlang der Fläche, ermöglicht. Tatsächlich werden zwischen der aus Kunststoff gefertigten Matte und der Aufständereinrichtung sowie zwischen der Matte und der Unterstützungsfläche jeweils geringe Reibzahlen beobachtet, die allgemein unterhalb von 0,5 angesiedelt sind und auf diese Weise die beschriebene schwimmende Lagerung unterstützen.

Die selbsttragende Auslegung der Aufständereinrichtung drückt aus, dass die Aufständereinrichtung als solche aufgrund ihrer inhärenten Struktur sämtliche tragenden Funktionen übernimmt und zugehörige Kräfte aufnimmt. Das heißt, die Einzelteile der Aufständereinrichtung nehmen in ihrer Gesamtheit die eingeleiteten Kräfte auf. Dadurch wird die Unterstützungsfläche im Regelfall lediglich mit dem durch die Aufständereinrichtung verursachten Zusatzgewicht belastet und nicht noch beispielsweise durch zusätzlich von der Aufständereinrichtung in die Unterstützungsfläche eingeleitete Kräfte.

Es hat sich bewährt, wenn die Aufständereinrichtung aus einzelnen miteinander verbindbaren Modulen aufgebaut ist. Diese jeweiligen Module mögen aus Blechprofilen hergestellt werden. Dabei greift man im Regelfall auf Aluminiumblechprofile als Blechprofile zurück, um das Gesamtgewicht der Aufständereinrichtung so gering wie möglich einzustellen. Hierzu trägt ergänzend der fachwerkartige Aufbau der Aufständereinrichtung bei. Tatsächlich setzt sich die Aufständereinrichtung üblicherweise aus einzelnen voneinander beabstandeten Modulreihen zusammen. Die einzelnen Modulreihen sind im Wesentlichen parallel zueinander angeordnet. Dabei mag der Abstand von einer zur nächst benachbarten Modulreihe an einen Sonnentiefstand angepasst sein. Das heißt, die Modulreihen sind voneinander so beabstandet, dass selbst im hiesigen Winter Abschattungseffekte nicht beobachtet werden. Dabei versteht es sich, dass der Abstand der Modulreihen untereinander durchaus unterschiedlich ist oder gestaltet werden kann, und zwar je nach geografischer Breite des Aufstellungsortes der erfindungsgemäßen Photovoltaikanlage. So ist es beispielsweise in Äquatornähe denkbar, dass die einzelnen Modulreihen überhaupt keinen Abstand zueinander aufweisen.

Im Rahmen einer Anbringung der erfindungsgemäßen Photovoltaikanlage in hiesigen Breiten hat es sich bewährt, wenn die Aufständereinrichtung - wie bereits erläutert - fachwerkartig gestaltet ist. Tatsächlich setzt sich die Aufständereinrichtung in Seitenansicht meist aus einem oder mehreren Dreiecken zusammen. Im Regelfall ist jede Modulreihe in Seitenansicht dreieckig gestaltet bzw. verfügt über eine dreieckige Seitenfläche. Dabei hat es sich bewährt, wenn das jeweilige Dreieck als rechtwinkliges Dreieck ausgebildet ist. Diese Vorgehensweise ermöglicht eine besonders stabile Auslegung der jeweiligen Modulreihe bzw. des fraglichen Dreieckes. Denn der rechte Winkel ist am Höchsten der Aufständereinrichtung vorgesehen und damit in einem Bereich, der besondere Lasten bei beispielsweise einer Windbeaufschlagung aufnehmen muss.

Nun kann ein solcher Winkel, der mit Hilfe von Blechprofilen definiert wird, besonders vorteilhaft durch ein oder mehrere ebenfalls rechteckige Verstärkungsbleche in diesem Bereich abgestützt werden. Außerdem hat es sich bewährt, wenn das rechtwinklige Dreieck mit einer langen Kathete und einer kurzen Kathete ausgebildet ist. Deren Längenverhältnis zueinander mag im Bereich von ca. 1:2 bis 1:3 oder sogar 1:4 liegen. In diesem Zusammenhang empfiehlt es sich, wenn die wenigstens doppelt so lang wie die kurze Kathete ausgelegte lange Kathete mit einer Länge bis zum Vierfachen der Länge der kurzen Kathete eingerichtet ist, um darauf die Solarzelle zu platzieren. Tatsächlich werden hierdurch Winkel zwischen der langen Kathete und der Unterstützungsfläche im Bereich zwischen ca. 10° und 30° beobachtet. Vorzugsweise liegt der Winkel im Bereich von ca. 20°. Dadurch wird ein besonders günstiger Selbstreinigungseffekt auf der Oberfläche der jeweiligen Solarzellen beobachtet.

Außerdem wird einerseits den wechselnden Sonnenständen in nördlichen Breitengraden Rechnung getragen, wobei Sonnentiefstände von beispielsweise 10° bis 15° gegenüber der Horizontalen immer noch zu einer relativ hohen Energieausbeute der auf der langen Kathete angeordneten Solarzelle korrespondieren. Andererseits stellt die angesprochene Neigung der langen Kathete gegenüber der Unterstützungsfläche respektive einer Horizontalen im Bereich zwischen ca. 10° und 30°, vorzugsweise ca. 20°, sicher, dass auf der Solarzelle befindlicher Schnee oder auch Eis beim oder nach dem Abschmelzen zuverlässig heruntergleiten kann. Vergleichbares gilt für Verschmutzungen, die problemlos durch Regenwasser abgewaschen werden. So oder so ist der mit der betreffenden Neigung verbundene Hangabtrieb groß genug, dass unter Berücksichtigung eines beim Abschmelzen entstehenden Flüssigkeitsfilmes zwischen dem Schnee respektive Eis und der Solarzelle sowie der damit verbundenen Reibungsverhältnisse die Solarzelle zuverlässig schneefrei bzw. eisfrei ist.

Des Weiteren empfiehlt die Erfindung, dass die Aufständereinrichtung in Seitenansicht und/oder Rückansicht zwischen einzelnen Blechprofilen definierte Freiflächen aufweist. Diese Freiflächen lassen sich bei Bedarf mittels Abschlussdeckeln verschließen. Auf diese Weise können etwaige Windangriffsflächen schon von vorneherein nicht entstehen. Außerdem lassen sich hierdurch Verwirbelungen unterhalb der von der Aufständereinrichtung getragenen Solarzellen zuverlässig vermeiden.

Im Ergebnis wird eine Photovoltaikanlage zur Verfügung gestellt, die zunächst einmal durch eine beschädigungsfreie Anbringungsmöglichkeit auf der zugehörigen Unterstützungsfläche überzeugt. Hierfür sorgen die ein oder mehreren Abspannmittel, welche die die Solarzellen tragende Aufständereinrichtung gegen die Unterstützungsfläche bzw. deren Oberfläche unter Berücksichtigung einer schwimmenden Lagerung auf der Unterstützungsfläche verspannen. Dabei sind die jeweiligen Abspannmittel einerseits an die Aufständereinrichtung und andererseits an eine Seitenkante der Unterstützungsfläche angeschlossen. Bei dieser Seitenkante mag es sich im Falle eines Daches als Unterstützungsfläche um die Attika, also beispielsweise eine Abschlusswand zur Dachabdeckung über einem Sims, handeln. Das ist selbstverständlich nur beispielhaft und nicht zwingend zu verstehen. Jedenfalls wird die Oberfläche der Unterstützungsfläche nicht beschädigt, weil das jeweilige Abspannmittel an der Seitenkante der Unterstützungsfläche angreift.

In Folge der größtenteils selbsttragenden Auslegung der Aufständereinrichtung wird sichergestellt, dass die die Aufständereinrichtung aufnehmende Unterstützungsfläche keine Kraft aufnehmende Funktion aufnimmt. Anders ausgedrückt, ist die Aufständereinrichtung so ausgelegt, dass sie beispielsweise ohne Verwindung die von ihr aufgenommenen Solarzellen trägt.

In Folge der Auslegung der Aufständereinrichtung aus jeweils Blechprofilen, vorteilhaft gekanteten Blechprofilen, kann eine gewichtsmäßig besonders vorteilhafte Ausführung realisiert werden. Denn bei den Blechprofilen handelt es sich um Aluminiumblechprofile. Dadurch lassen sich insgesamt Flächengewichte der Aufständereinrichtung inklusive der von ihr getragenen Solarzellen realisieren, die unterhalb von 15 kg/m² angesiedelt sind. Meistens wird sogar ein Flächengewicht von lediglich ca. 13 kg/m² beobachtet. Dadurch lassen sich auch bisher nicht nutzbare Dachflächen mit Photovoltaikanlagen ausrüsten, die aufgrund der aufnehmbaren Dachlasten bisher nicht bestückt werden konnten.

Die Aufständereinrichtung ist insgesamt nahezu wartungsfrei gestaltet. Hierzu trägt zunächst einmal der Aufbau aus Aluminiumblechprofilen bei, welcher Korrosionen verhindert. Außerdem kommen meistens aus rostfreiem Stahl hergestellte Abspannmittel zum Einsatz, die ergänzend die beschriebene Langlebigkeit unterstützen. Die Auslegung der einzelnen Modulreihen mit ihrem dreieckigen Charakter in Seitenansicht stellt sicher, dass Windangriffsflächen auf ein Minimum reduziert sind.

Außerdem eignet sich die damit verbundene Schrägstellung der Solarzellen für die Anbringung auf Flachdächern und/oder wenig geneigten (Hallen-)Dächern. Durch die Neigung der Solarzellen wird die Energieausbeute erhöht. Denn die Sonnenstrahlen treffen - auch bei tief stehender Sonne - unter großem Winkel auf die jeweilige Solarzelle. Dadurch ist die eingestrahlte Energie pro Flächeneinheit groß bzw. größer, als wenn die Solarzellen nicht geneigt mit Sonnenlicht bestrahlt würden.

Im Ergebnis wird zum ersten Mal die Möglichkeit geschaffen, beispielsweise Dächer mit gering ausgelegten Dachlasten zur umweltfreundlichen Energieerzeugung durch eine entsprechend gestaltete Photovoltaikanlage auszurüsten. Dabei kann mit einer besonders platzsparenden Belegung der Unterstützungsfläche gearbeitet werden. Denn die einzelnen Modulreihen der Aufständereinrichtung werden mit einem Minimalabstand zueinander in Parallelerstreckung ausgerichtet, welcher an den Sonnentiefstand am geografischen Ausstellungsort angepasst ist. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: die erfindungsgemäße Photovoltaikanlage in einer schematischen Seitenansicht,
- Fig. 2A: eine Modulreihe in Seitenansicht im Detail,
- Fig. 2B: die Modulreihe nach Fig. 2A in einer Ansicht aus Richtung A gemäß Fig. 1,
- Fig. 3: eine Ansicht von unten aus Richtung B entsprechend der Fig. 2A und
- Fig. 4: eine einzelne Modulreihe der Aufständereinrichtung mit abgenommenen Solarzellen in schematischer Aufsicht.

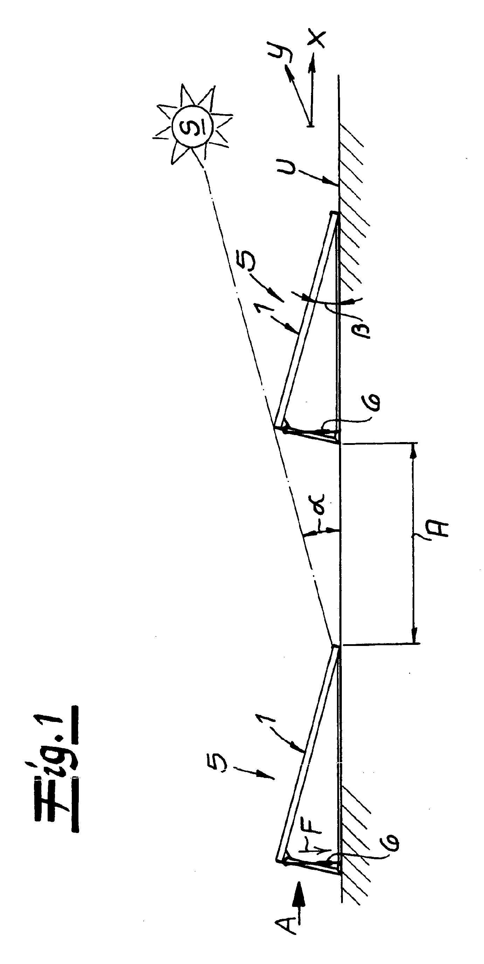

In den Figuren ist eine Photovoltaikanlage dargestellt, die mit mehreren Solarzellen 1 ausgerüstet ist Dabei werden die jeweiligen Solarzellen 1 von einer Aufständereinrichtung 2, 3, 4, 5 getragen. Die Aufständereinrichtung 2, 3, 4, 5 ist zur Anbringung der jeweiligen Solarzelle 1 oberhalb einer Unterstützungsfläche U eingerichtet und ausgelegt. Bei der Unterstützungsfläche U handelt es sich im Rahmen des Ausführungsbeispiels nach Fig. 1 um ein Hausdach U. Grundsätzlich kann als Unterstützungsfläche U aber auch eine Stellfläche oder allgemein eine Freifläche zum Einsatz kommen.

Die Aufständereinrichtung 2, 3, 4, 5 ist in Richtung auf eine angedeutete Sonne S geneigt. Das gleiche gilt für die darauf platzierten Solarzellen 1, um die Energieausbeute zu erklären. Die Neigung bzw. der Neigungswinkel *β* beträgt ca. 10° bis 30°. Das hängt von der geografischen Breite des Aufstellungsortes und davon ab, ob die Unterstützungsfläche U geneigt ist oder nicht. Dabei lassen sich selbstverständlich unterschiedliche Neigungswinkel *β* realisieren. - Es kann auch gänzlich ohne Neigung gearbeitet werden.

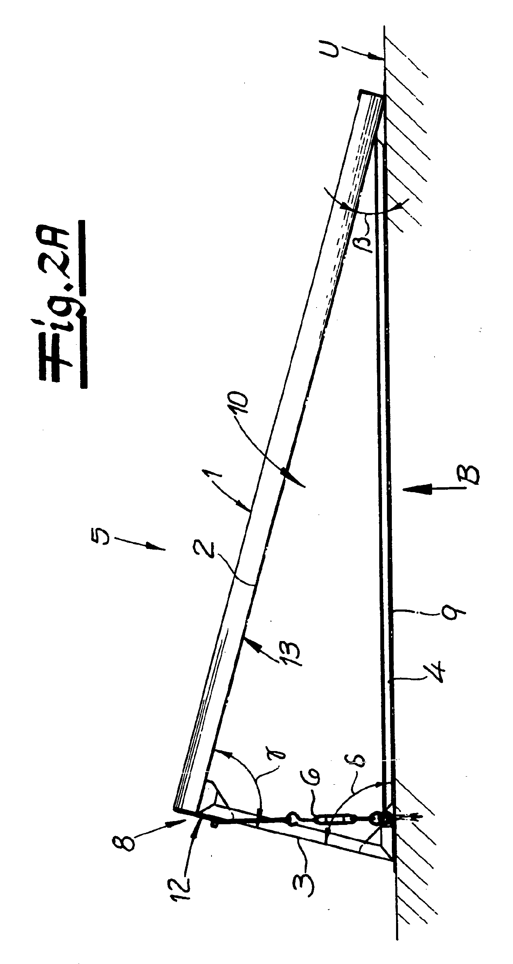

Erfindungsgemäß ist die Aufständereinrichtung 2, 3, 4, 5 schwimmend auf der betreffenden Unterstützungsfläche U gelagert. Dies wird besonders bei Betrachtung der vergrößerten Darstellung nach Fig. 2A deutlich. Tatsächlich setzt sich die Aufständereinrichtung 2, 3, 4 aus mehreren Modulreihen 5 zusammen, die unter Berücksichtigung eines axialen Abstandes A parallel zueinander verlaufend auf der Unterstützungsfläche U angeordnet sind. Der Abstand A der parallel zueinander verlaufenden Modulreihen 5 berücksichtigt einen in der Fig. 1 angedeuteten Tiefstand der Sonne S bzw. Sonnentiefstand, der bekanntermaßen in nördlichen Breiten am 21. Dezember erreicht wird. Dieser Sonnentiefstand mag zu einem Winkel *α* der dargestellten Sonne S gegenüber der Unterstützungsfläche U (Horizontalen) von ca. 15° korrespondieren.

Unter Berücksichtigung dieses Winkels *α* ist es erforderlich, dass eine rückseitige Kante der rechts in Fig. 1 angeordneten Modulreihe 5 einen Abstand A von wenigstens 0,3 m oder mehr von der benachbarten linken Modulreihe 5 aufweist. Das hängt von den gewählten Größenverhältnissen und insbesondere der Auslegung der Aufständereinrichtung 2, 3, 4, 5 im Detail ab. Dabei versteht es sich, dass der Abstand A variabel eingestellt werden kann und beispielsweise auch noch nach der Anbringung geändert werden mag. Das ist möglich, weil die Aufständereinrichtung 2, 3, 4, 5 bzw. die einzelnen Modulreihen 5 der Aufständereinrichtung 2, 3, 4, 5 schwimmend auf der Unterstützungsfläche U gelagert sind.

Diese schwimmende Lagerung der Aufständereinrichtung 2, 3, 4, 5 auf der Unterstützungsfläche U drückt aus, dass die einzelnen Modulreihen 5 bzw. die Aufständereinrichtung 2, 3, 4, 5 insgesamt eine (geringfügige) Bewegung vollführt oder ein Spiel sowohl in der dargestellten X- als auch in der Y-Richtung, das heißt entlang der Unterstützungsfläche U, zugelassen wird.

Außerdem ist die Aufständereinrichtung 2, 3, 4, 5 selbsttragend ausgelegt. Das heißt, die Aufständereinrichtung 2, 3, 4, 5 ist in der Lage, sämtliche von den Solarzellen 1 eingeleiteten Gewichtskräfte vollständig aufnehmen zu können. Die schwimmende Lagerung der Aufständereinrichtung 2, 3, 4, 5 stellt sicher, dass die Oberfläche der Unterstützungsfläche U befestigungsfrei gestaltet ist. Denn die Aufständereinrichtung 2, 3, 4, 5 wird mittels mehrerer Abspannmittel 6 mit jeweils einer Seitenkante 7 der Unterstützungsfläche U verbunden. Dabei ist das jeweilige Abspannmittel 6 einerseits mit der fraglichen Seitenkante 7 und andererseits mit der Aufständereinrichtung 2, 3, 4, 5 verbunden, und zwar vorteilhaft lösbar.

Außerdem ist das jeweilige Abspannmittel 6 längenveränderlich gestaltet, um die Aufständereinrichtung 2, 3, 4, 5 mit einer gegebenenfalls veränderbaren Kraft F beaufschlagen zu können. Tatsächlich übt das Abspannmittel 6 auf die Aufständereinrichtung die betreffende Kraft F aus, welche im Wesentlichen senkrecht zur Unterstützungsfläche U angeordnet ist. Dadurch wird die Aufständereinrichtung 2, 3, 4, 5 auf die Oberfläche der Unterstützungsfläche U gedrückt. Dennoch bleibt die schwimmende Lagerung beibehalten (vgl. den Pfeil F in Fig. 1).

Hierfür sorgen vorteilhaft ein oder mehrere Matten 9, die zwischen der Aufständereinrichtung 2, 3, 4, 5 und der Oberfläche der Unterstützungsfläche U angeordnet sind bzw. zwischengeschaltet werden. Das jeweilige Abspannmittel 6 ist vorteilhaft an oder in der Nähe eines Höchsten 8 der Aufständereinrichtung 2, 3, 4, 5 an die Aufständereinrichtung 2, 3, 4, 5 angeschlossen. Tatsächlich fällt das Höchste 8 der Aufständereinrichtung 2, 3, 4, 5 meistens mit einer Kante der Aufständereinrichtung 2, 3, 4, 5 zusammen.

Die Aufständereinrichtung 2, 3, 4, 5 setzt sich aus den einzelnen miteinander verbindbaren Modulen 5 bzw. den bereits angesprochenen Modulreihen 5 zusammen. Die einzelnen Modulreihen 5 können miteinander verbunden werden. Außerdem sind die einzelnen Module bzw. Modulreihen 5 jeweils aus Blechprofilen 2, 3, 4 aufgebaut. Bei den Blechprofilen 2, 3, 4 handelt es sich um gekantete Blechprofile aus Metallblech, also Blechprofile 2, 3, 4, die im Querschnitt U-förmig oder auch kastenförmig gestaltet sind. Dadurch wird eine außerordentliche Stabilität und Verwindungssteifigkeit der Blechprofile 2, 3, 4 zur Verfügung gestellt. Das gilt auch für den Fall, dass als Metallblech Aluminiumblech zum Einsatz kommt. Das heißt, die Blechprofile 2, 3, 4 sind als Aluminiumblechprofile 2, 3, 4 ausgestaltet und verfügen demzufolge über ein geringes Gewicht.

Dabei formen die jeweiligen Blechprofile 2, 3, 4 insgesamt und in Seitenansicht jeweils Dreiecke, wie die Fig. 1 und 2A deutlich machen. Das jeweilige Dreieck ist als rechtwinkliges Dreieck ausgelegt. Dabei befindet sich der rechte Winkel *γ* im Bereich des Höchsten 8 der Aufständereinrichtung 2, 3, 4, 5. Zwei Katheten 2, 3 schließen den genannten rechten Winkel *γ* ein. Dabei ist die eine Kathete 2 als lange Kathete 2 und die andere Kathete 3 als kurze Kathete 3 ausgelegt. Ihr Längenverhältnis ist so bemessen, dass die lange Kathete 2 wenigstens doppelt so lang und bis zu viermal so lang wie die kurze Kathete 3 bemessen ist. Auf bzw. an der langen Kathete 2 werden die einzelnen Solarzellen 1 festgelegt.

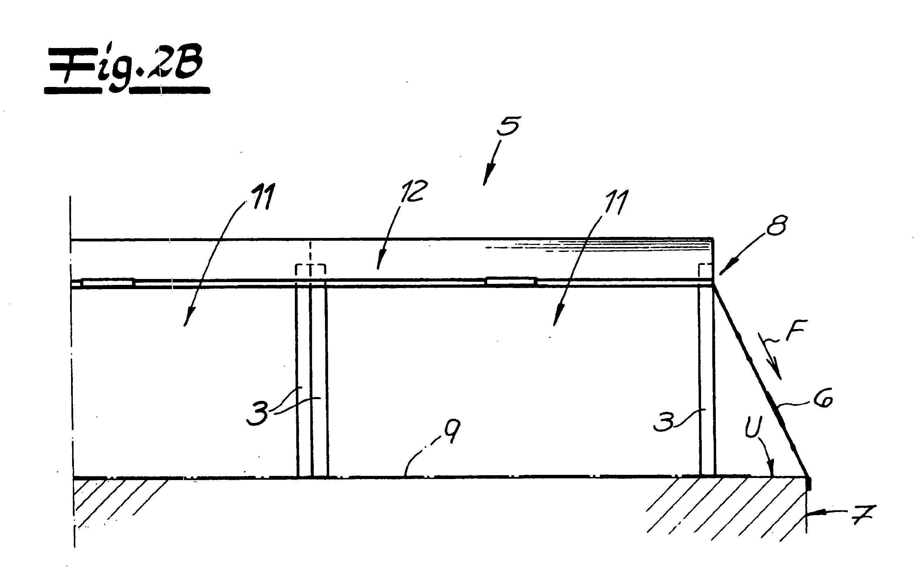

Zwischen den einzelnen Blechprofilen 2, 3, 4 sind in Seitenansicht Freiflächen 10 definiert. Ebenfalls erkennt man in einer Rückansicht nach der Fig. 2B Freiflächen 11 an einer Rückwand. Diese Freiflächen 11 sind jeweils zwischen den einzelnen Dreiecken aus den Blechprofilen 2, 3, 4 bzw. an der Rückwand realisiert. Um einen etwaigen Windangriff zu verhindern, können die betreffenden Freiflächen 10 bzw. 11 mit Hilfe von nicht ausdrücklich dargestellten Abschlussdeckeln verschlossen werden.

Der Winkel *β*, welcher zwischen der langen Kathete 2 und der Unterstützungsfläche U eingeschlossen wird bzw. welcher die Neigung der von der langen Kathete 2 getragenen Solarzellen 1 gegenüber der Horizontalen bzw. der Unterstützungsfläche U vorgibt, liegt im Rahmen des Ausführungsbeispiels im Bereich zwischen 10° und 30°. Meistens beträgt er ca. 20°, um ein einwandfreies Abgleiten eventueller Schneemassen oder von Eis zu ermöglichen, wie dies einleitend bereits beschrieben wurde. Außerdem ist der fragliche Winkel *β* an Sonnenstände in nördlichen (oder südlichen) geografischen Breiten angepasst. Demzufolge bemisst sich der noch verbleibende Winkel *δ* zwischen der Unterstützungsfläche U und der kurzen Kathete 3 zu ca. 80°.

Die Hypotenuse 4 des Dreieckes bzw. der zusammengesetzten Blechprofile 2, 3, 4 erstreckt sich entlang der Unterstützungsfläche U bzw. ist parallel hierzu angeordnet. Dabei ruht die jeweilige Hypotenuse bzw. das zugehörige Blechprofil 4 auf der jeweils zwischengeschalteten Matte 9. Dadurch wird die schwimmende Lagerung der Aufständereinrichtung 2, 3, 4, 5 gegenüber der Unterstützungsfläche U zur Verfügung gestellt.

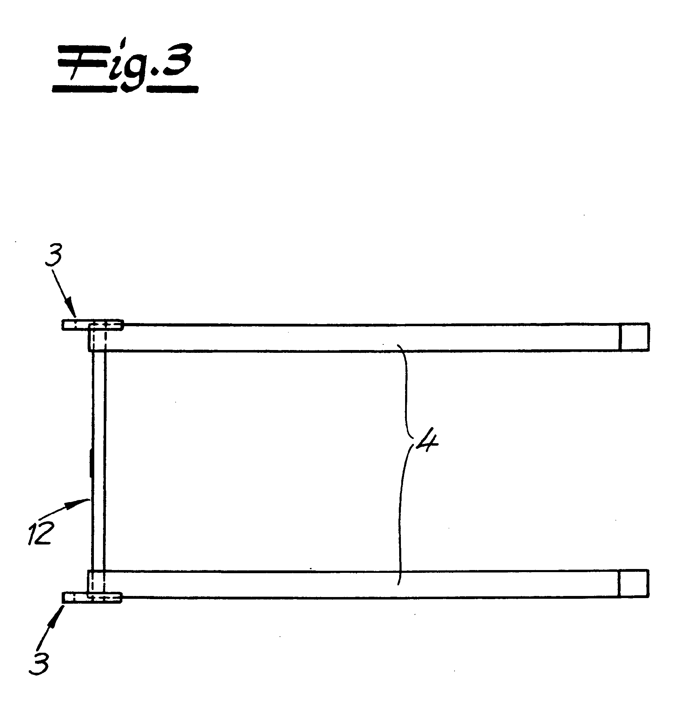

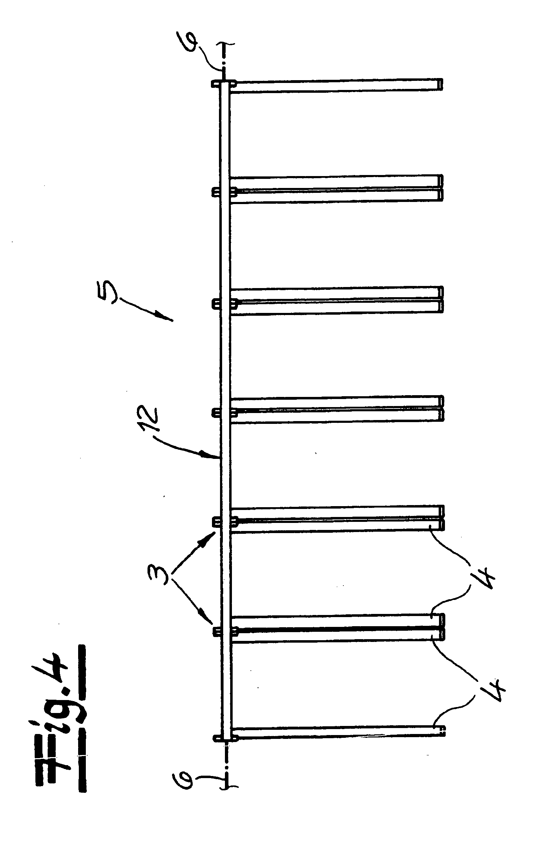

Der Einsatz von Aluminium und die insgesamt fachwerkartig miteinander verbundenen Blechprofile bzw. Aluminiumblechprofile 2, 3, 4 stellen sicher, dass das gesamte Flächengewicht der dargestellten Aufständereinrichtung 2, 3, 4, 5 inklusive der von ihr getragenen Solarzellen 1 unterhalb von 15 kg/m² angesiedelt ist. Oftmals werden sogar Flächengewichte von lediglich 13 kg/m² beobachtet. Dabei formen die einzelnen Blechprofile 2, 3, 4 ausweislich der Fig. 2B und 3 sowie 4 jeweils Dreieckfächer bzw. Dreieckgefache. Die Dreieckfächer bzw. Dreieckgefache sind aus Stabilitätsgründen meistens untereinander mit Hilfe von ein oder mehreren Längsstreben 12 gekoppelt.

Auch eine ein- oder mehrteilige Abdeckung 13 sorgt für ihre gegenseitige Verbindung. Dabei kann die Abdeckung 13 als Auflagefläche für die Solarzellen 1 fungieren. Alternativ hierzu können die einzelnen Solarzellen 1 aber auch die fragliche Abdeckung 13 definieren. In diesem Fall stellt die Abdeckung 13 gleichsam den Boden der zugehörigen Solarzelle 1 dar. Folgerichtig kann auf eine separate und zusätzlich zu den Solarzellen 1 realisierte Abdeckung 13 oftmals verzichtet werden.

## Patentansprüche

1. Photovoltaikanlage, mit wenigstens einer Solarzelle (1), und mit einer Aufständereinrichtung (2, 3, 4, 5) zur Anbringung der wenigstens einem Solarzelle (1) oberhalb einer Unterstützungsfläche (U), beispielsweise eines Daches (U), einer Stellfläche etc., wobei die Aufständereinrichtung (2, 3, 4, 5) schwimmend auf der Unterstützungsfläche (U) gelagert ist,
**dadurch gekennzeichnet,dass**
- die Aufständereinrichtung (2, 3, 4, 5) unter Zwischenschaltung wenigstens einer Matte (9) aus einem flexiblen Kunststoffmaterial auf der Unterstützungsfläche (U) schwimmend gelagert ist, wobei
- die wenigstens eine Matte (9) einen Spielausgleich zwischen einerseits der Aufständereinrichtung (2, 3, 4, 5) und andererseits der Unterstützungsfläche (U) in Längs- und Querrichtung, das heißt entlang der Fläche, ermöglicht, und wobei
- zwischen der wenigstens eine Matte (9) und der Aufständereinrichtung (2, 3, 4, 5) sowie zwischen der wenigstens einer Matte (9) und der Unterstützungsfläche (U) jeweils geringe Reibzahlen von allgemein unterhalb von 0,5 vorliegen und auf diese Weise die schwimmende Lagerung unterstützen.

2. Photovoltaikanlage nach Anspruch 1, **dadurch gekennzeichnet, dass** die Aufständereinrichtung (2, 3, 4, 5) selbsttragend ausgelegt ist.

3. Photovoltaikanlage nach Anspruch 1 oder 2, **dadurch gekennzeichnet, dass** die Aufständereinrichtung (2, 3, 4, 5) lediglich randseitig mit der Unterstützungsfläche (U) verbunden ist, wohingegen die Oberfläche der Unterstützungsfläche (U) befestigungsfrei gestaltet ist.

4. Photovoltaikanlage nach einem der Ansprüche 1 bis 3, **dadurch gekennzeichnet, dass** die Aufständereinrichtung (2, 3, 4, 5) mittels eines oder mehrerer Abspannmittel (6) mit einer Seitenkante (7) der Unterstützungsfläche (U) verbunden ist.

5. Photovoltaikanlage nach Anspruch 4, **dadurch gekennzeichnet, dass** das jeweilige Abspannmittel (6) einerseits an der Seitenkante (7) der Unterstützungsfläche (U) und andererseits an oder in der Nähe eines Höchsten (8) der Aufständereinrichtung (2, 3, 4, 5) angreift.

6. Photovoltaikanlage nach einem der Ansprüche 1 bis 4, **dadurch gekennzeichnet, dass** die Aufständereinrichtung (2, 3, 4, 5) aus einzelnen miteinander verbindbaren Modulen, insbesondere Modulreihen (5), aufgebaut ist.

7. Photovoltaikanlage nach Anspruch 6, **dadurch gekennzeichnet, dass** die einzelnen Module bzw. Modulreihen (5) voneinander beabstandet sowie im Wesentlichen parallel zueinander angeordnet sind.

8. Photovoltaikanlage nach einem der Ansprüche 1 bis 7, **dadurch gekennzeichnet, dass** die Aufständereinrichtung (2, 3, 4, 5) aus Blechprofilen, insbesondere Aluminiumblechprofilen (2, 3, 4, 5), aufgebaut ist.

9. Photovoltaikanlage nach einem der Ansprüche 1 bis 8, **dadurch gekennzeichnet, dass** die Aufständereinrichtung (2, 3, 4, 5) in Seitenansicht aus einem oder mehreren Dreiecken zusammengesetzt ist.

10. Photovoltaikanlage nach Anspruch 9, **dadurch gekennzeichnet, dass** das jeweilige Dreieck als rechtwinkliges Dreieck mit einer langen Kathete (2) und einer kurzen Kathete (3) und auf seiner langen Kathete (2) platzierten Solarzellen (1) ausgebildet ist.

11. Photovoltaikanlage nach einem der Ansprüche 1 bis 10, **dadurch gekennzeichnet, dass** die Aufständereinrichtung (2, 3, 4, 5) in Seitenansicht und/oder in Rückansicht zwischen einzelnen Blechfolien (2, 3, 4) definierte Freiflächen (10, 11) aufweist, die wahlweise mittels Abschlussdeckeln.

12. Photovoltaikanlage nach einem der Ansprüche 1 bis 11, **dadurch gekennzeichnet, dass** der Winkel (β) zwischen der langen Kathete (2) und der Unterstützungsfläche (U) im Bereich zwischen ca. 10° und 30°, vorzugsweise ca. 20°, angesiedelt ist.

13. Photovoltaikanlage nach einem der Ansprüche 1 bis 12, **dadurch gekennzeichnet, dass** das Flächengewicht der Aufständereinrichtung (2, 3, 4, 5) unterhalb von 15 kg/m² angesiedelt ist.

14. Photovoltaikanlage nach einem der Ansprüche 1 bis 13, **dadurch gekennzeichnet, dass** der Abstand (A) der einzelnen Module bzw. Modulreihen (5) der Aufständereionrichtung (2, 3, 4, 5) an einen Sonnentiefstand angepasst ist.

## Claims

1. A photovoltaic installation with at least one solar cell (1), and with a support apparatus (2, 3, 4, 5) for attaching the at least one solar cell (1) above a support face (U), for example a roof (U), an installation face etc., wherein the support apparatus (2, 3, 4, 5) is mounted floating on the support face (U),
**characterised in that**
- the support apparatus (2, 3, 4, 5) is mounted floating on the support face (U) with the interposition of at least one mat (9) made of a flexible plastic material, wherein
- the at least one mat (9) enables a compensation for play between the support apparatus (2, 3, 4, 5) on the one hand and the support face (U) on the other hand in the longitudinal and transverse directions, that is to say along the face, and wherein
- between the at least one mat (9) and the support apparatus (2, 3, 4, 5) and also between the at least one mat (9) and the support face (U), small friction coefficients generally below 0.5 are present in each case and in this manner support the floating mounting.

2. The photovoltaic installation according to Claim 1, **characterised in that** the support apparatus (2, 3, 4, 5) is designed in a self-supporting manner.

3. The photovoltaic installation according to Claim 1 or 2, **characterised in that** the support apparatus (2, 3, 4, 5) is connected only at the edge to the support face (U), whereas the surface of the support face (U) is configured without fixation.

4. The photovoltaic installation according to one of Claims 1 to 3, **characterised in that** the stand apparatus (2, 3, 4, 5) is connected by means of one or a plurality of guy means (6) to a side edge (7) of the support face (U).

5. The photovoltaic installation according to Claim 4, **characterised in that** the respective guy means (6) acts on the one hand on the side edge (7) of the support face (U) and on the other hand on or in the vicinity of a high point (8) of the support apparatus (2, 3, 4, 5).

6. The photovoltaic installation according to one of Claims 1 to 4, **characterised in that** the support apparatus (2, 3, 4, 5) is constructed of individual modules, which can be connected to one another, particularly module rows (5).

7. The photovoltaic installation according to Claim 6, **characterised in that** the individual modules or module rows (5) are arranged spaced apart from one another and also essentially parallel to one another.

8. The photovoltaic installation according to one of Claims 1 to 7, **characterised in that** the support apparatus (2, 3, 4, 5) is constructed from sheet profiles, particularly aluminium sheet profiles (2, 3, 4, 5).

9. The photovoltaic installation according to one of Claims 1 to 8, **characterised in that** the support apparatus (2, 3, 4, 5) is composed of one or a plurality of triangles when viewed from the side.

10. The photovoltaic installation according to Claim 9, **characterised in that** the respective triangle is constructed as a right angled triangle with a long leg (2) and a short leg (3) and solar cells (1) placed on its long leg (2).

11. The photovoltaic installation according to one of Claims 1 to 10, **characterised in that** the support apparatus (2, 3, 4, 5) has defined exposed faces (10, 11) between individual metal films (2, 3, 4) when viewed from the side, which are optionally closed off by means of end covers.

12. The photovoltaic installation according to one of Claims 1 to 11, **characterised in that** the angle (β) between the long leg (2) and the support face (U) is established in the range between approx. 10° and 30°, preferably approx. 20°.

13. The photovoltaic installation according to one of Claims 1 to 12, **characterised in that** the weight per unit area of the support apparatus (2, 3, 4, 5) is established below 15 kg/m².

14. The photovoltaic plant according to one of Claims 1 to 13, **characterised in that** the spacing (A) of the individual modules or module rows (5) of the support apparatus (2, 3, 4, 5) is adapted to a lowest sun position.

## Revendications

1. Installation photovoltaïque avec au moins une cellule solaire (1) et avec un système de bâti (2, 3, 4, 5) pour mettre en place la au moins une cellule solaire (1) au-dessus d'une surface de soutien (U), par exemple un toit (U), une surface de pose etc....pour lequel le système de bâti (2, 3, 4, 5) est monté flottant sur la surface de soutien (U)
**caractérisé en ce que**
- le système de bâti (2, 3, 4, 5) est monté flottant sur la surface de soutien (U) en intercalant au moins un tapis (9) fait d'un matériau plastique souple, pour lequel
- le au moins un tapis (9) permet une compensation de jeu entre, d'une part le système de bâti (2, 3, 4, 5) et, d'autre part la surface de soutien (U) dans le sens longitudinal et transversal, c'est-à-dire le long de la surface et pour lequel
- des coefficients de frottement faibles, en général inférieurs à 0,5, sont à chaque fois présents entre le au moins un tapis (9) et le système de bâti (2, 3, 4, 5) ainsi qu'entre le au moins un tapis (9) et la surface de soutien(U) et permettent de soutenir de cette manière le montage flottant.

2. Installation photovoltaïque selon la revendication 1 **caractérisée en ce que** le système de bâti (2, 3, 4, 5) est conçu autoporteur.

3. Installation photovoltaïque selon la revendication 1 ou 2 **caractérisée en ce que** le système de bâti (2, 3, 4, 5) est relié à la surface de soutien (U) uniquement sur le bord, alors que la surface supérieure de la surface de soutien (U) est constituée sans fixation.

4. Installation photovoltaïque selon une quelconque des revendications 1 à 3 **caractérisée en ce que** le système de bâti (2, 3, 4, 5) est relié à une arête latérale (7) de la surface de soutien (U) au moyen d'un ou plusieurs moyens d'amarrage (6).

5. Installation photovoltaïque selon la revendication 4 **caractérisée en ce que** le moyen d'amarrage (6) correspondant prend prise d'une part sur l'arête latérale (7) de la surface de soutien (U) et d'autre part sur ou à proximité d'un point le plus haut (8) du système de bâti (2, 3, 4, 5).

6. Installation photovoltaïque selon une quelconque des revendications 1 à 4 **caractérisée en ce que** le système de bâti (2, 3, 4, 5) est conçu à partir de modules individuels combinables entre eux, en particulier de séries de modules (5).

7. Installation photovoltaïque selon la revendication 6 **caractérisée en ce que** les modules individuels ou séries de modules (5) sont disposés à distance les uns des autres ainsi que pour l'essentiel parallèles l'un par rapport à l'autre.

8. Installation photovoltaïque selon une quelconque des revendications 1 à 7 **caractérisée en ce que** le système de bâti (2, 3, 4, 5) est conçu en profilés de tôle, en particulier en profilés de tôle d'aluminium (2, 3, 4, 5).

9. Installation photovoltaïque selon une quelconque des revendications 1 à 8 **caractérisée en ce que** le système de bâti (2, 3, 4, 5) est composé en vue latérale d'un ou plusieurs triangles.

10. Installation photovoltaïque selon la revendication 9 **caractérisée en ce que** le triangle correspondant est conçu comme triangle avec un long côté de l'angle droit (2) et un côté de l'angle droit (3) court et des cellules cellulaires (1) placées sur son long côté d'angle droit (2).

11. Installation photovoltaïque selon une quelconque des revendications 1 à 10 **caractérisée en ce que** le système de bâti (2, 3, 4, 5) présente en vue latérale et/ou en vue arrière des surfaces libres entre les feuilles de tôle (2, 3, 4) individuelles, celles-ci facultativement au moyen de panneaux de fermeture.

12. Installation photovoltaïque selon une quelconque des revendications 1 à 11 **caractérisée en ce que** l'angle (β) entre le long côté de l'angle droit (2) et la surface de soutien (U) est situé dans une gamme entre environ 10° et 30°, de préférence environ 20°.

13. Installation photovoltaïque selon une quelconque des revendications 1 à 12 **caractérisée en ce que** le poids au mètre carré de surface du système de relave (2, 3, 4, 5) est situé en dessous de 15 kg/m².

14. Installation photovoltaïque selon une quelconque des revendications 1 à 13 **caractérisée en ce que** la distance (A) des modules individuels ou séries de modules (5) du système de bâti (2, 3, 4, 5) est adaptée à un niveau bas du soleil.
